# EUROPÄISCHE PATENTSCHRIFT

(11) **EP 1 556 722 B1**
(45) Veröffentlichungstag und Bekanntmachung des Hinweises auf die Patenterteilung: **27.09.2006**
(21) Anmeldenummer: 04740975.0
(22) Anmeldetag: 14.07.2004
(51) Int. Cl.: G02B 6/38, H01R 43/052

(54) **VORRICHTUNG ZUR FESTLEGUNG EINES KABELENDES IN EINER DURCHBRECHUNG EINES STECKERS**
DEVICE FOR FIXING THE END OF A CABLE IN A PASSAGE OF A CONNECTOR
DISPOSITIF POUR FIXER L'EXTREMITE D'UN CABLE DANS UN PASSAGE D'UN CONNECTEUR

(30) Priorität: 23.09.2003 DE 10343864
(43) Veröffentlichungstag der Anmeldung: 27.07.2005
(73) Patentinhaber: Schäfer Werkzeug- und Sondermaschinenbau GmbH, 76669 Bad Schönborn (DE)
(72) Erfinder: WOLL, Matthias, 76684 Östringen (DE); WOLL, Johannes, 76669 Bad Schönborn (DE); KREMER, Berthold, 68753 Waghäusel (DE); NEUBAUER, Stefan, 67166 Otterstadt (DE)
(74) Vertreter: Moldenhauer, Herbert
(86) Internationale Anmeldenummer: PCT/EP2004/007752
(87) Internationale Veröffentlichungsnummer: WO 2005/040877

(56) Entgegenhaltungen:
- WO-A-01/71399
- CH-A- 665 983
- DE-C- 3 528 203
- US-A- 4 567 650

## Beschreibung

### Technisches Gebiet

Die Erfindung betrifft eine Vorrichtung zur Festlegung eines Kabelendes in einer sich parallel zu dessen Achse erstreckenden Durchbrechung eines Steckers.

### Stand der Technik

Eine solche Vorrichtung ist bekannt aus WO 01/88583 A1. Sie dient zur Laserverschweißung einer Ferrule mit einem Lichtwellenleiterende. Zur Erfassung der jeweiligen Zuordnung sind Sensoren vorgesehen, die eine Laserverschweißung auslösen, wenn sich die Teile in der richtigen gegenseitigen Zuordnung befinden. Durch den Schweißprozess verursachte, nachträgliche Lageveränderungen der Teile werden dabei nicht erfasst.

Ferner wird auf WO 01/71399 A2 verwiesen, das die Merkmale des Oberbegriffs von Anspruch 1 offenbart.

Aus der DE 37 26 588 ist eine signalerzeugende Tastermeßeinrichtung bekannt, die es erlaubt, eine Vielzahl von Punkten einer Prüflingsoberfläche rasch und mit hoher Geschwindigkeit abzutasten. Ein Hinweis auf die Verbindung eines Kabelendes mit einem Stecker ist der Druckschrift nicht entnehmbar.

Aus der EP 0542 144 B1 ist eine Vorrichtung zur Befestigung eines Steckkontaktes am Ende eines Kabels bekannt. Der Steckkontakt besteht dabei aus einem metallischen Werkstoff und weist vor seiner Festlegung an dem Kabel zwei Paare von quer zu dessen Längserstreckung vorstehenden Crimpfahnen auf, die während der Festlegung jeweils gegeneinander einwärts umgebogen und in einen das Kabel umschließenden, elektrisch isolierenden Mantel aus Kunststoff eingepresst bzw. an den vorgelagerten Abschnitt des abisolierten Kabelendes angepresst werden. Bei einwandfreier Einführung des Kabels in die Durchbrechung des Steckers zwischen den Crimpfahnen gelingt es hierdurch, einen festen Sitz und sicheren Kontakt des Steckers zu erzielen. Fehlerhaft oder gar nicht eingeführte Kabelenden werden bei der bekannten Vorrichtung jedoch nicht erkannt. Dieses kann während der bestimmungsgemäßen Verwendung eines solchen Kabels zu Kontaktproblemen in Bezug auf das angeschlossene Gerät führen.

Eine besonders exakte Positionierung wird bei Steckern verlangt, die an Lichtwellenleiterenden zur Anwendung gelangen. Die Festlegung eines solchen Steckers kann durch einen Klebe-, Schweiß- oder Crimpprozess bewirkt werden, was eine erhebliche, mechanische und/oder thermische Belastung des Steckers und des Kabelendes bewirkt und seinerseits dazu beitragen kann, die Positionierung des Steckers in Bezug auf das Kabelende zu verändern.

### Darstellung der Erfindung

Der Erfindung liegt die Aufgabe zugrunde, eine Vorrichtung der eingangs genannten Art derart weiter zu entwickeln, dass eine fehlerhafte Festlegung des Kabelendes in einer sich parallel zu dessen Achse erstreckenden Durchbrechung eines Steckers besser erkannt werden kann als bisher.

Diese Aufgabe wird erfindungsgemäß bei einer Vorrichtung der eingangs genannten Art durch die Merkmale von Anspruch 1 gelöst. Auf vorteilhafte Ausgestaltungen nehmen die Unteransprüche Bezug.

Bei der erfindungsgemäßen Vorrichtung zur Festlegung des Kabelendes in einer sich parallel zu dessen Achse erstreckenden Durchbrechung eines Steckers sind vorgesehen:

Zuführmittel zur Einführung des Kabelendes in die Durchbrechung, ein erster Anschlag, an dem die Stirnseite des Steckers zur Anlage gelangt, ein zweiter Anschlag, an dem die Stirnseite des Kabelendes zur Anlage gelangt, Festlegungsmittel zur Festlegung des Steckers an dem Kabelende, eine Messeinrichtung zur Erfassung des tatsächlichen Abstands D zwischen der Stirnseite des Kabelendes und der Stirnseite des Steckers nach der Festlegung des Steckers an dem Kabelende, wobei die Messeinrichtung in dem zweiten Anschlag enthalten ist und einen durch eine Feder abgestützten, den zweiten Anschlag durchdringenden Signalstift umfasst, der sich parallel zu der Achse des Kabelendes erstreckt und durch die Zuführmittel gegen die Kraft der Feder verschiebbar ist.

Der tatsächliche Abstand zwischen der Stirnseite des Kabelendes und der Stirnseite des Steckers wird mit Hilfe der Messeinrichtung in einem jeden Einzelfall nach der Festlegung des Steckers an dem Kabelende nachgemessen. Unkorrekte gegenseitige Zuordnungen können auf diese Weise zuverlässig erkannt und ausgesondert werden. Hierdurch sind in allen Fällen ein sicherer Sitz des Steckers und ein sicherer Kontakt gewährleistet.

Die Messeinrichtung ist unmittelbar in dem Anschlag enthalten. Sie zeichnet sich durch eine besonders geringe Größe aus. Die Messeinrichtung ist durch den Signalstift und eine Feder von der Stirnfläche des Kabelendes getrennt. Sie kann dadurch so groß dimensioniert werden, dass im Schadensfall ein leichter, manueller Austausch möglich ist.

Der Signalstift ist relativ zur Stirnfläche des Anschlags verschiebbar. In den meisten Fällen genügt es, nachzuprüfen, ob der Signalstift oberflächenbündig in den zweiten Anschlag eingedrückt ist. In der Praxis kommen allerdings in Abhängigkeit von der Bearbeitungsqualität der Stirnfläche des Kabelendes sowie von der Art, der Beschaffenheit und der Festlegung von dessen Ummantelung positive und negative Abweichungen vor. Diese werden durch die erfindungsgemäße Vorrichtung erkannt und automatisch auf ihre Relevanz untersucht. Dadurch ist es möglich, fehlerhafte Verbindungen völlig auszuschließen. Der Signalstift kann, bezogen auf die Lage des zweiten Anschlags, zweckmäßig eine positive oder negative Position einnehmen und in entsprechende Signale umformen.

Bei der im Allgemeinen automatisch ablaufenden Einführung des Kabelendes in die den Stecker parallel zu dessen Achse durchdringende Durchbrechung durch das Zuführmittel gelangt die Stirnfläche des Kabelendes zunächst an der Stirnfläche des Signalstiftes und dann an dem zweiten Anschlag zur Anlage. Das Erreichen dieser Position kann zugleich dazu benutzt werden, eine Betätigung der Festlegungsmittel auszulösen, um eine Verbindung zwischen dem Kabelende und dem Stecker zu bewirken. Falls der diesbezügliche Prozess als solcher oder maßliche Abweichungen des Kabelendes und/oder des Steckers dazu führen, dass sich die beiden Stirnflächen anschließend relativ zueinander verschoben haben, dann wird dies unverzüglich von der Messeinrichtung erkannt, die mit dem Signalstift in Verbindung steht. Die Messeinrichtung umfasst daher zweckmäßig eine Auswerteinrichtung, die geeignet ist, positive und negative Abweichungen des Abstandes D von einem Sollwert zu erkennen und in ein Signal umzuformen. Dieses wird zweckmäßig mit einem willkürlich einstellbaren Sollwert verglichen, dessen Größe von der geforderten Qualität bestimmt wird und dessen Überschreitung eine Aussonderung und/oder Markierung der fehlerhaften Verbindung bewirkt, beispielsweise durch Abschneiden des Kabelendes an dem von dessen Stirnseite abgewandten Ende. Das auf diese Weise erhaltene, frisch erzeugte Ende des Kabelendes kann nach einer ergänzenden Stirnflächenbearbeitung wieder aufs Neue in die sich parallel zur Achse erstreckende Durchbrechung eines weiteren Steckers eingeführt werden, bis die jeweiligen Stirnflächen die ihnen zugeordneten Anschläge jeweils berühren. Der Signalstift ist dann wieder oberflächenbündig in den zweiten Anschlag eingedrückt und bewirkt über die Festlegungsmittel eine Verbindung des Kabelendes mit dem Stecker. Gelingt dies dann in einwandfreier Weise, dann kann das Kabelende einschließlich des daran festgelegten Steckers der Vorrichtung entnommen und seiner bestimmungsgemäßen Verwendung zugeführt werden. Im anderen Fall erfolgt die Aussonderung aufs Neue und gegebenenfalls eine manuelle Justierung der Vorrichtung und weitere Wiederholung des Vorgangs.

Die erfindungsgemäße Vorrichtung gestattet es, fehlerfreie Verbindungen zwischen beliebigen Kabelenden oder Signalleitern und deren Ende umschließenden Befestigungselementen herzustellen wie z.B. Steckern, Kontakten oder Ferrulen, die auf den verschiedensten Gebieten zur Anwendung gelangen können. Eine besonders vorteilhafte Verwendung bezieht sich auf die Herstellung einer Verbindung zwischen einem Stecker und einem Kabelende, insbesondere zwischen einer Ferrule und dem Ende eines Lichtwellenleiters. Das stirnseitige Ende des Lichtwellenleiters und die Ferrule müssen dabei im gebrauchsfertigen Zustand um einen Wert von 0,01 bis 0,1 mm gegeneinander versetzt sein, zweckmäßig um 0,05 mm, um eine einwandfrei Signalübertragung zu einem angeschlossenen Gerät zu gewährleisten. Dies ist ein extrem hoher Anspruch in Bezug auf die Bestückung von Kabelenden mit Steckern. Er lässt sich durch die erfindungsgemäße Vorrichtung erstmals fehlerfrei erfüllen.

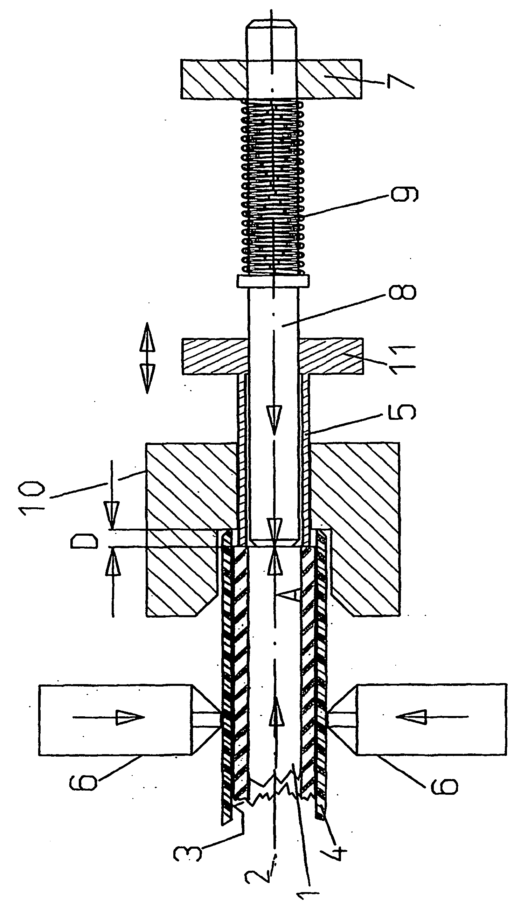

### Kurzbeschreibung der Zeichnung

Eine beispielhafte Ausführung der erfindungsgemäßen Vorrichtung wird nachfolgend anhand der in der Anlage beigefügten Zeichnung näher erläutert.

### Ausführung der Erfindung

Die in der Zeichnung längsgeschnitten wiedergegebene Vorrichtung dient zur Festlegung des Kabelendes 1 in einer sich parallel zu dessen Achse 2 erstreckende Durchbrechung 3 eines Steckers 4.

Der Stecker kann aus Kunststoff oder Metall bestehen und die Durchbrechung aus einer gegebenenfalls trichterartig nach außen erweiterten Bohrung oder den Zwischenraum von Crimpfahnen.

Das Kabelende 1 wird durch ein Lichtwellenleiterende gebildet, das außenseitig von einem Mantel aus einem thermoplastischen Kunststoff umschlossen ist, beispielsweise aus Polyamid oder Polyethylen. Der Mantel kann auch mehrlagig ausgebildet sein und auf der Innenseite aus einem Kunststoff oder Glas mit einem vergleichsweise höheren Schmelzpunkt bestehen. Die äußerste Lage muss aus einem mit dem Werkstoff des Steckers 4 verschmelzbaren Werkstoff bestehen, wenn beide Teile zum Herstellen einer Verbindung miteinander verschmolzen oder verschweißt werden sollen. Zur Herstellung einer Verbindung mit einem das Kabelende 1 umschließenden Stecker 4 aus Metall durch Verpressen oder Ancrimpen des Steckers 4 muss der Mantel hinreichend verformbar und gegebenenfalls elastisch sein, um Relativverlagerungen durch spätere Fließprozesse zu verhindern.

Der Stecker 4 wird bei der gezeigten Ausführung durch eine hülsenförmige Ferrule gebildet, die eine Durchbrechung in Gestalt einer Bohrung aufweist. Die Ferrule besteht aus einem polymeren Werkstoff, der mit dem den Mantel des Kabelendes 1 verschweißbar ist, bevorzugt aus Polyamid.

Die Zuführung der Ferrule zu der Vorrichtung und die Zuführung des Kabelendes 1 erfolgen durch automatisch betätigte, in der Zeichnung nicht wiedergegebene Zuführmittel. Diese bewirken, dass zunächst die Ferrule in die gezeigt Position überführt wird, gefolgt von der Zuführung des vorderen Kabelendes 1 durch die Durchbrechung der Ferrule hindurch. Sowohl auf die Ferrule als auch auf das Kabelende 1 wird dabei eine Kraft ausgeübt, die ihre beiden Stirnflächen in Berührungskontakt zu den ihnen jeweils vorgelagerten, höhenversetzten Anschlagflächen der Teile 5, 10 bringt.

Der Höhenunterschied D ist bei der gezeigten Ausführungsform verstellbar durch eine Relativverschiebung des Teiles 11 in dem Teil 10, was es ermöglicht, eine optimale Signalleitung bei der bestimmungsgemäßen. Verwendung der Steckverbindung zu erzielen. Die dazu nötigen Werte lassen sich mit einfachen Versuchen ermitteln und auf die Großserienherstellung übertragen.

Beim Anpressen des Kabelendes 1 an den Anschlag 5 wird der Signalstift 8 oberflächenbündig in den ihn unmittelbar umschließenden Anschlag 5 eingedrückt, was dazu führt, dass die Messeinrichtung 7 ein Signal abgibt, welches eine Betätigung der Festlegungsmittel 6 auslöst. Diese bestehen bei dem gezeigten Ausführungsbeispiel aus einer Ultraschallschweißeinrichtung. Sie kann bedarfsweise durch eine Laserschweißeinrichtung oder in Abhängigkeit von den gewählten Werkstoffkombinationen durch andere Mittel ersetzt sein, beispielsweise durch eine Klemm- oder Crimpeinrichtung. Letztere gelangen insbesondere zur Anwendung bei Verwendung von Steckern 4, die aus einem metallischen Werkstoff bestehen, beispielsweise aus Messing.

Die Vorrichtung kann auch mit Voreilung betrieben werden, derart, dass der Signalstift 8 bereits vor dem Erreichen der oberflächenbündigen Eindrückung in den zweiten Anschlag 5 das Signal abgibt, beispielsweise beim Erreichen einer Position von 0,02 mm vor dem zweiten Anschlag 5. Trägheitsmomente in den das Kabelende 1 bewegenden Vorschubeinrichtungen lassen sich dadurch derart kompensieren, dass in allen Fällen eine einwandfreie Festlegung des Kabelendes 1 gelingt.

Führt die Betätigung der Festlegungsmittel zu einer nachträglichen Relatiwerschiebung der Stirnflächen des Steckers 4, bezogen auf das Kabelende 1, die einen willkürlich festlegbaren Sollwert überschreitet, dann gilt die erhaltene Verbindung als fehlerhaft. Ein entsprechend bestücktes Kabelende 1 wird ausgesondert und der Prozess in seiner Gesamtheit wiederholt, bis eine fehlerfreie Verbindung erhalten worden ist.

Die mit der Erfindung vorstehend erzielten Vorteile bestehen darin, dass eine Einzelkontrolle einer jeden Verbindung problemlos möglich ist. Die Vorrichtung zeichnet sich durch eine große Robustheit aus. Sie ist dadurch ausgezeichnet für eine industrielle Massenproduktion geeignet.

## Patentansprüche

1. Vorrichtung zur Festlegung eines Kabelendes (1) in einer sich parallel zu dessen Achse (2) erstreckenden Durchbrechung (3) eines Steckers (4), mit
- Zuführmittel zur Einführung des Kabelendes (1) in die Durchbrechung (3),
- einem ersten Anschlag (10), an dem die Stirnseite des Steckers (4) zur Anlage gelangt,
- einem zweiten Anschlag (5), an dem die Stirnseite des Kabelendes (1) zur Anlage gelangt,
- Festlegungsmittel (6) zur Festlegung des Steckers (4) an dem Kabelende (1), **gekennzeichnet durch**
eine Messeinrichtung (7) zur Erfassung des tatsächlichen Abstands D zwischen der Stirnseite des Kabelendes (1) und der Stirnseite des Steckers (4) nach der Festlegung des Steckers an dem Kabelende (1),
wobei
die Messeinrichtung (7) in dem zweiten Anschlag (5) enthalten ist und einen durch eine Feder (9) abgestützten, den zweiten Anschlag (5) durchdringenden Signalstift (8) umfasst, der sich parallel zu der Achse (2) des Kabelendes (1) erstreckt und **durch** die Zuführmittel gegen die Kraft der Feder verschiebbar ist.

2. Vorrichtung nach Anspruch 1, bei der der Stecker als Kontakt oder Ferrule ausgebildet ist.

3. Vorrichtung nach den Ansprüchen 1 oder 2, wobei der Signalstift (8) zumindest oberflächenbündig in den zweiten Anschlag (5) eindrückbar ist.

4. Vorrichtung nach einem der Ansprüche 1 bis 3, wobei die Messeinrichtung (7) eine Auswerteinrichtung umfasst, die geeignet ist, Abweichungen des Abstandes D von einem Sollwert zu erkennen und in ein Signal umzuformen.

5. Vorrichtung nach Anspruch 4, wobei Mittel vorgesehen sind, die geeignet sind, das Signal zu erkennen.

6. Vorrichtung nach Anspruch 5, wobei Mittel (6) zum Aussondern und/oder Markieren der Verbindung vorgesehen sind.

7. Vorrichtung nach Anspruch 1, wobei das Kabelende (1) als Ende eines Lichtwellenleiters ausgebildet ist.

8. Verwendung der Vorrichtung nach einem der Ansprüche 1 bis 7 bei der Herstellung der Verbindung zwischen einer Ferrule und dem Ende eines Lichtwellenleiters.

9. Verwendung der Vorrichtung nach einem der Ansprüche 1 bis 7 bei der Herstellung der Verbindung zwischen einem Stecker und dem Kabelende (1).

## Claims

1. An apparatus for fixing a cable end (1) in an aperture (3), which extends parallel to the axis (2) of the said cable end (1), in a plug (4), having
- feed means for the purpose of inserting the cable end (1) into the aperture (3),
- a first stop (10), against which the front side of the plug (4) comes to bear,
- a second stop (5), against which the front side of the cable end (1) comes to bear,
- fixing means (6) for the purpose of fixing the plug (4) at the cable end (1), **characterized by** a measuring device (7) for the purpose of detecting the actual distance D between the front side of the cable end (1) and the front side of the plug (4) once the plug has been fixed at the cable end (1), the measuring device (7) being contained in the second stop (5) and comprising a signal pin (8), which is supported by a spring (9), passes through the second stop (5), extends parallel to the axis (2) of the cable end (1) and can be displaced counter to the force of the spring by the feed means.

2. An apparatus according to claim 1, in which the plug is in the form of a contact or ferrule,

3. An apparatus according to either of claims 1 and 2, it being possible for the signal pin (8) to be pressed into the second stop (5) such that it is at least flush with the surface.

4. An apparatus according to any one of claims 1 to 3, the measuring device (7) comprising an evaluation device which is suitable for detecting discrepancies between the distance D and a desired value and converting these discrepancies into a signal.

5. An apparatus according to claim 4, means being provided which are suitable for detecting the signal.

6. An apparatus according to claim 5, means (6) being provided for the purpose of selecting and/or marking the connection.

7. An apparatus according to claim 1, the cable end (1) being in the form of an end of an optical waveguide.

8. Use of the apparatus according to any one of claims 1 to 7 when producing the connection between a ferrule and the end of an optical waveguide.

9. Use of the apparatus according to any one of claims 1 to 7 when producing the connection between a plug and the cable end (1).

## Revendications

1. Dispositif pour fixer une extrémité de câble (1) dans un passage (3) d'un connecteur (4), le passage s'étendant parallèlement à l'axe (2) de l'extrémité de câble, comprenant
- un moyen d'amenée pour introduire l'extrémité de câble (1) dans le passage (3),
- une première butée (10) sur laquelle le côté frontal du connecteur (4) se met en appui,
- une seconde butée (5) sur laquelle le côté frontal de l'extrémité de câble (1) se met en appui,
- un moyen de fixation (6) pour fixer le connecteur (4) sur l'extrémité de câble (1),
**caractérisé par** un dispositif de mesure (7) pour saisir la distance effective D entre le côté frontal de l'extrémité de câble (1) et le côté frontal du connecteur (4) après la fixation du connecteur sur l'extrémité de câble (1), le dispositif de mesure (7) étant contenu dans la seconde butée (5) et comprenant une tige de signalisation (8) supportée par un ressort (9) et passant à travers la seconde butée (5), laquelle tige s'étend parallèlement à l'axe (2) de l'extrémité de câble (1) et peut être déplacée par le moyen d'amenée contre la force du ressort.

2. Dispositif selon la revendication 1, dans lequel le connecteur est exécuté en tant que contact ou ferrule.

3. Dispositif selon la revendication 1 ou 2, la tige de signalisation (8) pouvant être enfoncée dans la seconde butée (5) au moins de manière à ce que leurs surfaces soient dans le même plan.

4. Dispositif selon l'une des revendications 1 à 3, le dispositif de mesure (7) comprenant un dispositif d'analyse adapté pour détecter des écarts entre la distance D et une valeur prescrite et les transformer en un signal.

5. Dispositif selon la revendication 4, dans lequel des moyens adaptés pour détecter le signal sont prévus.

6. Dispositif selon la revendication 5, dans lequel des moyens (6) pour trier et/ou marquer la connexion sont prévus.

7. Dispositif selon la revendication 1, dans lequel l'extrémité de câble (1) est exécutée en tant qu'extrémité d'un guide d'onde lumineuse.

8. Utilisation du dispositif selon l'une des revendications 1 à 7 lors de la fabrication de la connexion entre une ferrule et l'extrémité d'un guide d'onde lumineuse.

9. Utilisation du dispositif selon l'une des revendications 1 à 7 lors de la fabrication de la connexion entre un connecteur et l'extrémité de câble (1).
